Europäisches Patentamt

European Patent Office

Office européen des brevets

(11) Numéro de publication: **0 251 906 B1**

# FASCICULE DE BREVET EUROPEEN

(45) Date de publication de fascicule du brevet:
29.05.91

(51) Int. Cl.⁵: **B62K 5/04**, B62D 37/04, B62D 9/02, B62H 1/10

(21) Numéro de dépôt: 87401471.5

(22) Date de dépôt: 25.06.87

(54) **Dispositifs de stabilisation pour véhicule inclinable.**

(30) Priorité: 27.06.86 FR 8609332

(43) Date de publication de la demande:
07.01.88 Bulletin 88/01

(45) Mention de la délivrance du brevet:
29.05.91 Bulletin 91/22

(84) Etats contractants désignés:
BE DE ES GB IT NL

(56) Documents cités:
EP-A- 0 004 230
FR-A- 776 107
FR-A- 2 486 899
US-A- 3 794 351

(73) Titulaire: **Patin, Pierre**
**15, rue Buffon**
**F-75005 Paris(FR)**

(72) Inventeur: **Patin, Pierre**
**15, rue Buffon**
**F-75005 Paris(FR)**

(74) Mandataire: **Rodhain, Claude et al**
**Cabinet Claude Rodhain 30, rue la Boétie**
**F-75008 Paris(FR)**

## Description

Pour réaliser des véhicules de faible encombrement transversal, comparable à celui d'un véhicule à deux roues tel que motocyclette ou scooter, on a cherché à construire des véhicules inclinables à trois ou quatre roues, comportant une suspension articulée.

Le brevet FR-A-776 107 (BATORI), qui a servi de base pour le préambule de la revendication 1, décrit un dispositif permettant d'incliner la caisse d'un véhicule sous l'action de la force centrifuge dans le but de confort pour les passagers. Pour ce faire, la caisse s'incline vers l'intérieur de courbes. Ce n'est pas l'ensemble du véhicule qui est inclinable mais seulement la caisse de ce dernier.

Le brevet FR-A-2 486 899 (TOWNSET) concerne un véhicule monté sur roues à équilibrage automatique et plus particulièrement un véhicule à trois roues comportant deux roues distantes montées sur un cadre en forme de parallélogramme de manière à pouvoir s'incliner avec ce dernier dans des positions d'équilibre, grâce à un dispositif de détection automatique commandant un organe d'actionnement de manière à provoquer l'inclinaison latérale du véhicule dans une position d'équilibre et comportant un circuit hydraulique de commande des cylindres hydrauliques.

La suspension peut être réalisée, soit par articulation de la structure du véhicule sur un essieu, comme il est connu par les brevets français 1 562 248 et 2 031 813 (P. Patin) soit par un système à parallélogramme ou trapèze déformable, comme connu entre autres par le brevet US 3 480 098 (JE. WARD Jr), soit enfin par une suspension à bielles et à roues indépendantes, comme il est bien connu dans la technique automobile et cité dans les brevets français 828 405 (F. Matton) et 1 207 733 (K.J. Lindblom).

Un tel véhicule possède la stabilité dynamique d'un véhicule à deux roues, mais n'est pas stable à l'arrêt ; cette instabilité est due au fait que le centre gravité du véhicule, lors d'un petit déplacement autour de la position moyenne pour laquelle le poids et la résultante des réactions du sol sont opposées, tend toujours à descendre et par conséquent l'énergie potentielle du système déformable à diminuer.

On conçoit aisément qu'un système dont la déformation tendrait au contraire à provoquer l'élévation du centre de gravité, c'est-à-dire à augmenter l'énergie potentielle, serait stable, une telle augmentation d'énergie ne pouvant s'effectuer spontanément sans apport d'énergie extérieure.

La présente invention vise à créer de tels systèmes articulés. En outre, dans certains cas, les liaisons constituant les éléments d'articulation seront telles qu'elles pourront n'intervenir qu'en cas de nécessité, particulièrement à l'arrêt ou juste avant l'arrêt ; en effet, lorsque le véhicule roule, il se comporte comme un "deux roues" (motocyclette ou scooter) et dispose d'une stabilité dynamique. Ces liaisons pourront être modifiées en fonction de la verticale apparente de manière à maintenir la référence parallèle à cette verticale apparente, par le jeu d'un servo-mécanisme.

Dans ce but, le dispositif stabilisateur selon le préambule de la revendication 1 se caractérise par les mesures indiquées dans sa partie caractérisante. En d'autres termes, une partie au moins du véhicule, dite partie secondaire, est liée au reste du véhicule supportant les réactions du sol, dite partie primaire, de telle façon que lors d'une rotation relative de la partie primaire par rapport au sol, matérialisée par la rotation du plan moyen longitudinal du châssis primaire par rapport à un essieu ou un balancier transversal, c'est-à-dire en définitive par rapport au sol, la partie secondaire est soulevée grâce à la rotation d'un élément ou bras rotatif articulé sur le primaire et qui porte ce secondaire, rotation qui est multiple de celle du plan moyen de la partie primaire par rapport au sol. Le cas échéant, cette liaison en rotation pourra n'intervenir qu'en tant que de besoin, particulièrement à l'arrêt, grâce à un système d'embrayage ou de crabotage susceptible d'être commandé par le conducteur et ou par la vitesse et ou par l'inclinaison par rapport à la verticale réelle ou apparente (résultante de la pesanteur et de la force centrifuge).

La description qui va suivre fera bien comprendre le principe du procédé et les diverses modalités de réalisation de dispositifs d'application du procédé.

La figure 1 représente schématiquement un véhicule dont la caisse ou habitacle constitue la partie secondaire qui se soulève par rotation d'ensemble autour d'un point du châssis primaire.

La figure 2 représente en perspective le châssis primaire du véhicule schématisé à la figure 1.

La figure 3 représente également en perspective un châssis primaire de véhicule dont les roues sont portées par des bielles de suspension tirées et conjuguées par un balancier aux lieu et place du parallélogramme articulé de la figure 2.

La figure 4 représente schématiquement un véhicule dont la caisse constitue la partie secondaire qui est soulevée par la rotation du bras rotatif mais reste parallèle à elle-même en coulissant sur un support lié au châssis primaire et vertical quand ce châssis est au repos sur un plan horizontal.

Les figures 5a, 5b et 5c représentent différents systèmes multiplicateurs de rotation de même sens par rapport à la verticale.

Les figures 6a, 6b et 6c représentent différents systèmes multiplicateurs de rotation de sens opposés.

2

EP 0 251 906 B1

Les figures 7a et 7b représentent d'autres systèmes multiplicateurs de rotation de même sens.

La figure 8 représente un système multiplicateur de rotation de même sens.

La figure 9 représente un système multiplicateur de rotation de sens inverse.

Les figures 10a et 10b représentent un système de stabilisateur embrayable.

La figure 11 représente un dispositif de commande d'embrayage pour ce type de stabilisateur.

La figure 12 représente en perspective la structure d'un véhicule dans lequel la caisse est articulée de façon à constituer la partie secondaire dont le mouvement participe à la stabilisation et à la commande d'embrayage.

La figure 13 représente la liaison entre le siège du conducteur et la commande d'embrayage objet de la figure 12.

Les figures 14a et 14b représentent un autre type de commande d'embrayage.

La figure 15 représente un système de liaison dans lequel l'embrayage est remplacé par un système basé sur le phénomène de cabestan.

La figure 16 représente un système de liaison constitué par un train épicycloïdal dans lequel la référence est contrôlée par un servo-mécanisme.

La figure 17 représente schématiquement le principe d'un servo-mécanisme de contrôle de la référence.

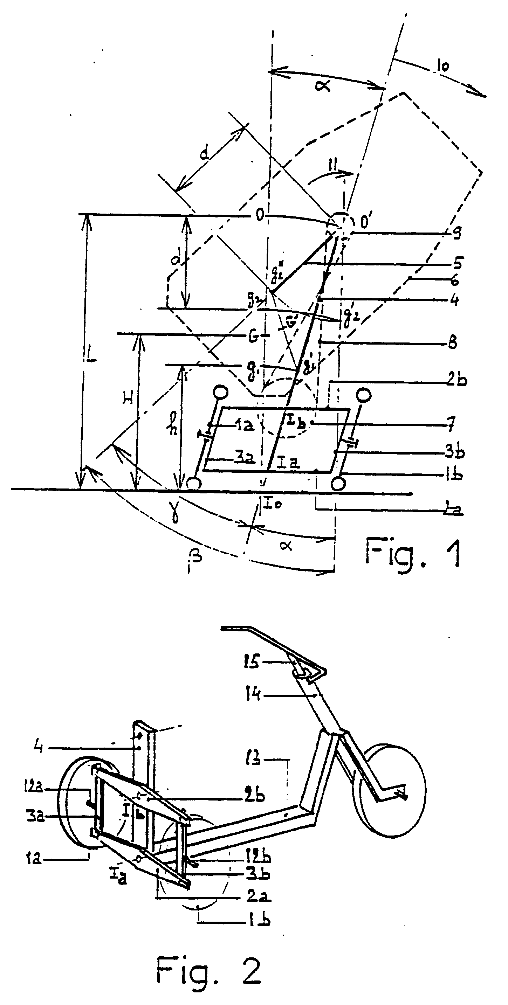

Sur la figure 1, on a représenté schématiquement la partie arrière d'un véhicule inclinable à 3 roues. Les roues 1a, 1b sont fixées à un parallélogramme articulé constitué par deux éléments parallèles au sol 2a, 2b, et deux éléments parallèles aux plans des roues 3a, 3b. Un élément de structure porteur 4 est articulé sur les points milieux ia et ib des éléments 2a et 2b. Une structure portée représentée par la ligne pointillée 6 est solidaire d'un bras rotatif 5 articulé en 0 sur l'élément porteur 4.

A l'élément 2b est fixée une poulie 7 qui entraîne, grâce à une courroie 8, une seconde poulie 9 solidaire du bras 5. Sur cette figure 1, la courroie est croisée ce qui entraîne que si le véhicule s'incline d'un angle $\alpha$ (dans le sens de la flèche 10), la poulie 9 tourne dans le même sens (sens de la flèche 11)). Si R est le rayon de la poulie 7 et r celui de la poulie 9, la poulie 9 tourne d'un angle $\gamma = \frac{R}{r} \alpha = k\alpha$ par rapport à la 0, c'est-à-dire d'un angle $\beta = \gamma + \alpha = (\frac{R}{r} + 1) \alpha$ par rapport à la verticale, le sol étant supposé horizontal.

On verrait de même que, si la courroie n'était pas croisée, le rapport de multiplication serait

$$(\frac{R}{r} - 1) = k-1$$

Nous appellerons dans la suite, partie primaire du véhicule, l'ensemble du parallélogramme articulé, de l'élément de structure 4 et de tout ce qui est solidaire de cet élément et participe à son mouvement ; et partie secondaire, tout ce qui est solidaire du bras rotatif 5 articulé en 0 sur l'élément 4.

A l'origine du mouvement, le centre de gravité de la partie primaire est en g1, celui de la partie secondaire est en g2 et le centre de gravité G de l'ensemble est en G entre g1 et g2. Après une petite rotation d'angle $\alpha$,

g1 est venu en g'1, g2 en g"2 après deux rotations successives g2 g'2 et g'2 g"2,G vient en G' entre g'1 et g"2.

Si H est la distance au sol de G, h celle de g1, L celle de 0, et si d est celle de g2 au point 0,p1 et p2 les poids respectifs de l'ensemble primaire et de l'ensemble secondaire, le couple de renversement de l'ensemble par rapport au point i₀ situé au sol est

$$C1 = p1 \ h \ \sin \alpha + p2 \ (L \ \sin \alpha - d \ \sin \beta)$$

Il existe un couple de redressement p2 d sin $\beta$, qui, par le jeu des poulies, est multiplié par le rapport des rayons k et le couple qui s'oppose à la rotation de l'élément 4 par rapport à la poulie 7 solidaire de l'élément 2b qui reste sensiblement parallèle au sol, est donc :

$$C2 = Kp2 \ d \ \sin \beta$$

Si $\alpha$ et $\beta$ sont petits, ce qui se produit lorsque le véhicule va commencer à s'incliner, on a, comme

3

$$\beta = (R+1)\alpha = (k+1)\alpha \ , \ \sin\beta \simeq \beta = (k+1)\alpha$$

$$C2 = p2 \ dk(k+1)\alpha \ \text{et} \ C1 = p1 \ h\alpha + p2 \ [L \ \alpha - d(k+1)\alpha \ ]$$

$$\text{Donc} \ \frac{C2}{C1} = \frac{p2 \ d \ k(k+1)}{p1 \ h + p2[L - d(k+1)]}$$

H étant la cote du centre de gravité au repos, on a la relation

$$H = \frac{p1 \ h + p2(L-d)}{p1 + p2}$$

et comme $p1 + p2 = P \quad PH = p1 \ h + p2(L-d)$

Il n'y aura pas renversement si

$\frac{C2}{C1} > 1$ ou $C2 > C1$

$p2 \ d \ K(K+1) > p1 \ h - p2 \ k \ d + p2(L-d)$

$p2 \ d \ [K(K+2)] > PH$

ou enfin

$$K(K+2) > \frac{PH}{P_2 \ d}$$

On voit aisément que cette condition correspond au fait que G a monté en venant en G'
En effet

$$H = \frac{P_2(L-d) + P_1 h}{P}$$

est devenu

$$H' = \frac{P_2(L \cos\alpha - d \cos\beta) + P_1 h \cos\alpha}{P}$$

avec

$$\cos\alpha \simeq 1 - \frac{\alpha^2}{2}, \quad \cos\beta \simeq 1 - \frac{\beta^2}{2} = 1 - \frac{\alpha^2}{2}(k+1)^2$$

et l'on a

$$H' - H = \frac{1}{P}[p2(-L\frac{\alpha^2}{2} + d\frac{\beta^2}{2}) - p1 \ h\frac{\alpha^2}{2}]$$

$$= \frac{\alpha^2}{2P}[p2\{-L + d(k+1)^2\} - p1 \ h]$$

et comme

$$L = \frac{d + PH - p1\ h}{p2}$$

$$H' - H = \frac{\alpha^2}{2\ell}\ [p2\ d\left\{(1+k)^2 - 1\right\} - PH\ ]$$

et H' - H sera positif, c'est-à-dire que G aura monté,

$$si\ (k+1)^2 - 1 > \frac{PH}{p_2 d}\ \ or\ (K+1)^2 - 1 = k(k+2)$$

On retrouve donc bien la même condition.

La figure 2 montre comment peut être réalisée la partie primaire d'un véhicule inclinable selon l'invention. Les roues 1a, 1b sont fixées par leurs axes 12a, 12b aux éléments 3a, 3b qui constituent avec les balanciers 2a, 2b, le parallélogramme déformable de la figure 1. Sur ce parallélogramme s'articule en ia et ib l'élément de structure 4 solidaire lui-même d'une poutre longitudinale 13 constituant l'ossature du châssis du véhicule. Cette poutre 13 porte à l'avant la colonne de direction 14 qui reçoit la fourche d'orientation 15. Des éléments de suspension, non représentés, peuvent être incorporés entre les axes de roues 12a et 12b et les éléments 3a, 3b.

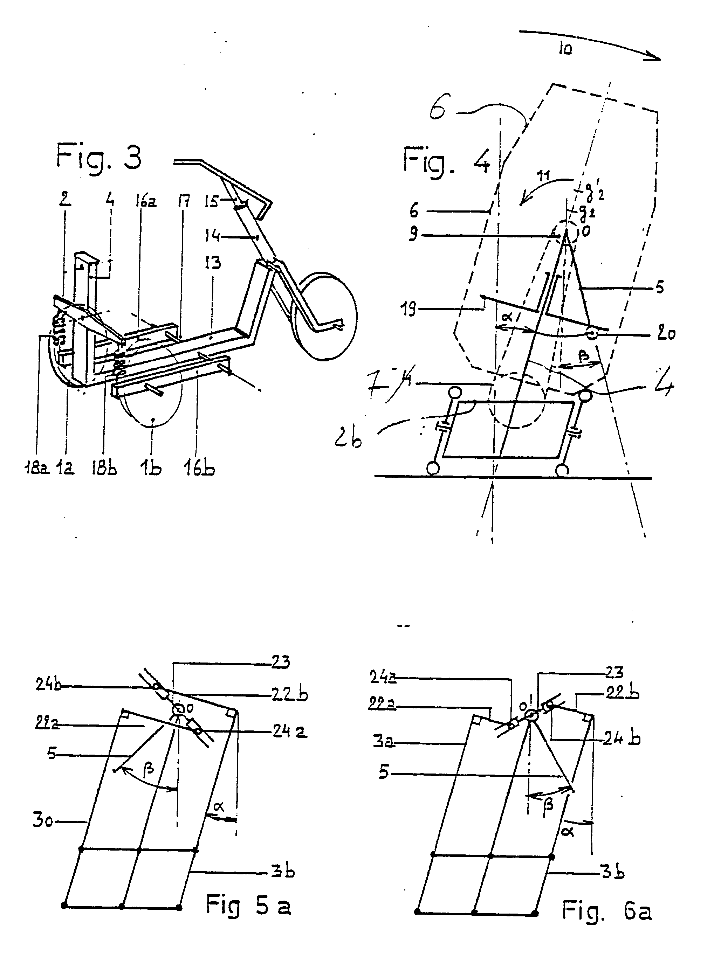

La figure 3 représente un autre mode de réalisation de cette partie primaire. Les éléments 4, 13, 14, 15 du châssis sont les mêmes que dans la figure 2.

Les roues 1a, 1b, sont montées sur des bielles tirées 16a, 16b, articulées sur un axe 17 fixé à la poutre 13 et perpendiculaire au plan moyen longitudinal du véhicule. Le poids de celui-ci est appliqué au balancier 2 et transmis aux bielles de suspension 16a, 16b par des ressorts-amortisseurs 18a, 18b.

Ce système est sensiblement équivalent au précédent et présente l'avantage de permettre une transmission facile du mouvement aux roues par l'intermédiaire d'éléments rotatifs portés par l'axe 17 et non représentés sur la figure.

La figure 4 représente un véhicule selon l'invention dans lequel la partie primaire, au lieu de tourner en s'inclinant comme dans la figure 1, coulisse le long de l'élément de structure 4. De même, la courroie d'entraînement entre les poulies 7 et 9 n'étant pas croisée, la poulie 9 tourne d'un angle $\beta$ opposé à l'angle $\alpha$ et égal en valeur absolue à $\beta = (k-1)\alpha$ avec $k = \frac{R}{r}$

La partie secondaire 6 est solidaire d'une traverse 19 et coulisse librement sur l'élément 4. Cette traverse est portée par un galet 20 fixé à l'extrémité du bras rotatif 5, de longueur d, solidaire de la poulie 9. Si h2 est la hauteur du centre de gravité g2 de la partie secondaire au repos, g2 vient en g'2 par le jeu des rotations et h2 devient

$$h'2 = [\ h2 + d\left\{1 - \cos(\alpha+\beta)\ \right\}]\cos\alpha = (1 - \frac{\alpha^2}{2})\ [\ h2 + d\ \frac{k^2\alpha^2}{2}\ ]$$

L'effort appliqué au galet n'est plus que p2 cos $\beta$ mais le couple correspondant est p2 d cos $\beta$ sin($\alpha + \beta$)

La condition de non-renversement s'écrit :

$$kp2\ d(1 - \frac{\alpha^2}{2})\ k > [p1\ h + p2\ h2 + p2\ d\ \frac{k^2\alpha^2}{2}]\alpha$$

ou :

$$k^2\ p2\ d(1 - \frac{\alpha^2}{2}) > PH + p2\ d\ \frac{k^2\alpha^2}{2}$$

Toutes réductions faites, il vient

$$K^2 \left(1 - \alpha^2\right) > \frac{PH}{p2d}$$

et si $\alpha$ est petit, on peut écrire

$$k^2 > \left(1 + \xi\right) \frac{PH}{p^2 d}$$

où $\epsilon$ est de l'ordre de $\alpha^2$

On retrouve la même condition en écrivant que la centre de gravité G de l'ensemble a monté dans le mouvement d'inclinaison du véhicule.

Si la courroie de liaison des poulies était croisée, on trouverait la même condition. La liaison en rotation entre l'élément 4 appartenant à la partie primaire et le bras rotatif 5 appartenant à la partie secondaire (figure 1) ou provoquant le mouvement de la partie secondaire (figure 4) a été représentée sur ces deux figures comme constituée par un ensemble de courroies et de poulies. Il va de soi que cette liaison pourrait aussi être constituée par des engrenages. Dans tous les cas, cette liaison détermine un couple de rappel progressif qui, lorsque le véhicule est à l'arrêt sur un plan horizontal, le rappelle à la verticale et lui donne donc une stabilité naturelle.

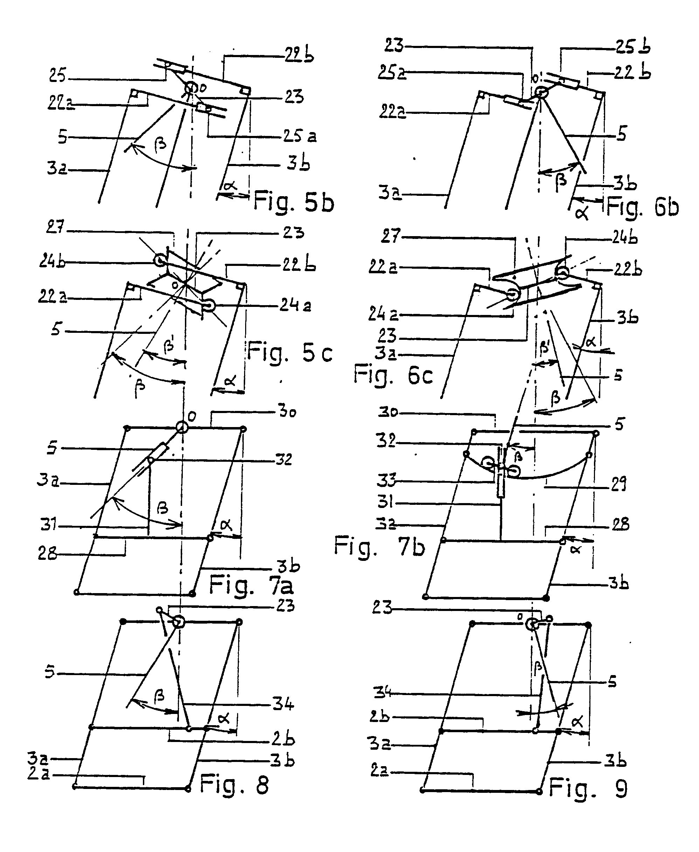

Si le véhicule se déplace sur un plan horizontal et en courbe, ce couple de rappel aura tendance à s'opposer à l'inclinaison que le conducteur voudra donner à son véhicule. Aussi pourra-t-on chercher à réaliser des liaisons ne donnant pas aux rotations relatives des éléments 4 et 5 des rapports de démultiplication constants. Ces liaisons peuvent être constituées de façon simple comme il est représenté sur les figures 5 à 9.

Sur les figures 5a à 7b, les éléments latéraux 3a et 3b sont prolongés vers le haut. Au même niveau, l'élément de structure 4 porte un balancier 23 auquel est fixé perpendiculairement le bras rotatif 5 relié à la structure secondaire.

Sur les figures 5a à 6c, ces bras portent à leurs extrémités des galets 24a, 24b, dont le mouvement provoque la rotation du balancier 23 dont les extrémités portent des coulisses dans lesquelles glissent les galets 24a, 24b. Sur les figures 5b et 6b, c'est le balancier qui porte les galets 25a, 25b qui glissent dans des coulisses portées par les bras 22a, 22b.

Ces différents systèmes ont en commun l'inconvénient de donner un couple de rappel croissant avec l'inclinaison, ce qui peut être gênant en cas de prise de courbe à grande vitesse induisant une force centrifuge élevée, encore que celle-ci, dans des dispositifs du type de la figure 1, intervienne de manière favorable.

Les figures 5c et 6c représentent des dispositifs dérivés de ceux des figures 5a et 6a, mais l'action des galets 24a, 24b s'effectue, non sur le balancier 23 proprement dit, mais sur une came 27 de forme judicieusement choisie pour obtenir telle loi $\beta' = f(\alpha)$ que l'on désire. On voit sur ces figures que l'angle $\beta'$ est plus petit que l'angle $\beta$ qui résulterait des dispositifs des figures 5a, 5b et 6a, 6b. Avec de tels dispositifs, il est même possible, par exemple dans le cas de la figure 5c, de ramener la valeur de $\beta$ à celle de $\alpha$ pour de grandes inclinaisons, c'est-à-dire d'annuler le couple de rappel.

Dans le cas de la figure 4, on obtiendrait également un couple de rappel moins progressif en donnant à la traverse 19 une forme légèrement concave vers le haut.

La figure 7a représente un autre mode de liaison. Le parallélogramme articulé est muni d'un quatrième élément 28 auquel est fixée perpendiculairement une tige 31 portant un galet 32 qui se déplace dans une coulisse de l'élément 5 articulé en 0.

La figure 7b représente un système voisin de celui de la figure 7a, mais dans lequel l'articulation en 0 devient virtuelle et est remplacée par un chemin de roulement 29 sur lequel se déplace un chariot 33 qui porte la structure secondaire et est guidé par la tige 31 dans laquelle coulisse un galet 32 porté par le chariot 33. Le chemin de roulement 29 peut avoir telle forme que l'on désire pour obtenir un couple de rappel donné.

Sur les figures 8 et 9, on a représenté des dispositifs de liaison en rotation simplifiés, constitués par une simple bielle 34 reliant entre eux l'élément 2b et le balancier 23, les points d'articulation étant choisis de façon que le bras de levier sur 2b soit plus long que le bras de levier sur 23.

Tous les dispositifs décrits jusqu'à présent à titre d'exemples non limitatifs, comportent une liaison permanente entre l'élément 2b lié à la structure primaire et le bras rotatif 5 qui provoque le soulèvement de la structure secondaire. On conçoit aisément que ce soit là un inconvénient si le véhicule doit se déplacer et/ou stationner sur un terrain non horizontal, indépendamment de la présence, signalée précédemment, d'un effort de rappel susceptible de s'ajouter à au moins une partie de la force centrifuge.

Un dispositif caractéristique de l'invention consiste à ne réaliser cette liaison que lorsqu'elle est nécessaire, c'est-à-dire au moment de l'arrêt, alors qu'en cours de route le véhicule est entièrement libre en ce qui concerne son inclinaison et se comporte alors comme un véhicule à deux roues.

Dans ce but, il va être décrit une application à un système du type de la figure 4.

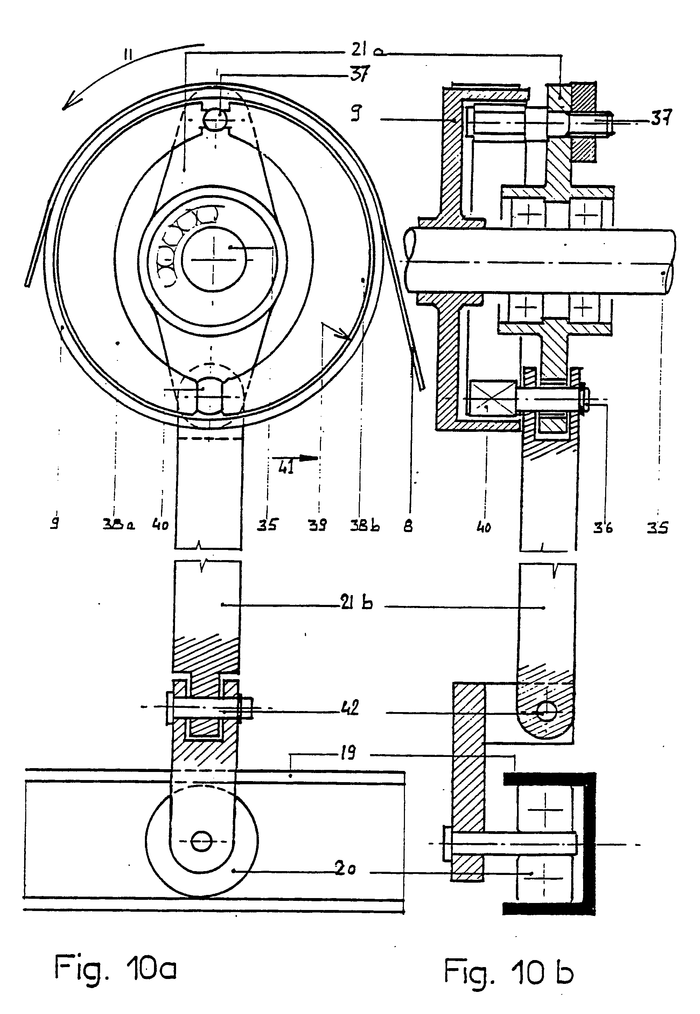

Les figures 10a et 10b représentent un système d'embrayage du bras 5 sur la poulie 9.

Sur l'axe 35 de la poulie 9, porté par l'élément de structure primaire 4, est monté en rotation un bras 21a sur lequel vient s'articuler par l'axe 36 un bras secondaire 21b, l'axe 36 et le bras 21b étant solidaires en rotation, l'ensemble 21a, 21b remplaçant le bras rotatif 5. Le bras 21a porte par un axe 37 deux garnitures de frein 38a, 38b qui peuvent venir en friction sur une surface cylindrique 39 ménagée à l'intérieur de la poulie 9 et coaxiale à cette poulie. L'axe 36 comporte une came méplate 40 dont la rotation provoque l'écartement des garnitures 38a, 38b et par suite la solidarisation de l'ensemble 21a, 21b avec la poulie 9. On voit que si la poulie 9 tourne dans le sens de la flèche 11 et si l'articulation 36 est poussée dans le même sens (flèche 41), l'embrayage se produit et est maintenu par le seul fait du couple appliqué, grâce au poids de la structure secondaire, par le levier 21b et la came méplate 40. En effet, cette structure secondaire est solidaire de la traverse 19, portée par le galet 20 qui est lui-même monté articulé en 42 sur le bras 21b.

Par contre, si l'articulation 36 est poussée dans le sens opposé à la rotation de la poulie 9, le poids de la structure secondaire tend à débloquer les garnitures et l'embrayage ne se produit pas.

La commande de l'embrayage peut se faire, soit automatiquement par le jeu de la pesanteur seule, soit sous le contrôle d'un dispositif commandé par le conducteur et/ou par la vitesse du véhicule.

Le déplacement de l'articulation 36 destiné à amorcer l'embrayage peut se faire par l'intermédiaire d'un dispositif agissant soit sur le levier 21b, soit sur le bras rotatif 21a, soit directement sur le couple de garnitures 38a, 38b.

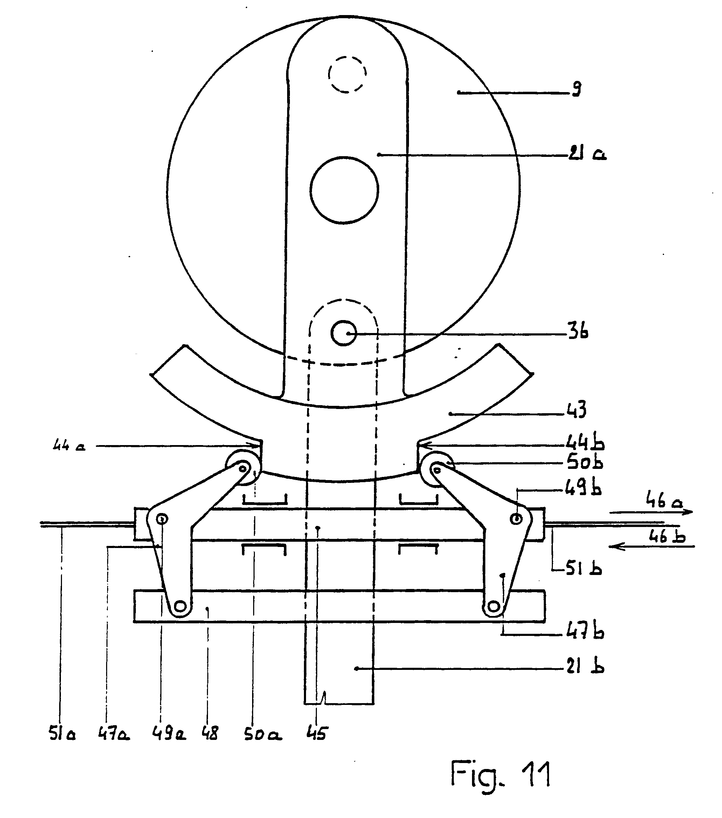

La figure 11 représente un dispositif commandé par la pesanteur et/ou par l'inclinaison du conducteur sur son siège comme il sera expliqué plus loin.

Au bras rotatif 21a est fixé un secteur 43 porteur de deux crans symétriques 44a et 44b.

Une plaquette 45 qui coulisse librement sur l'élément 4 de la structure primaire parallèlement aux flèches 46a, 46b, porte à chaque extrémité des leviers coudés 47a, 47b reliés entre eux par une biellette 48 et articulés sur des axes 49a, 49b.

L'extrémité d'un levier tel que 47a non liée à la biellette porte un petit roulement 50a qui s'appuie, au repos, sur le cran 44a. Le déplacement de la plaquette 45 dans le sens de la flèche 45a, par exemple, provoque le déplacement vers le haut du roulement 50a et son blocage dans le cran 44a, tandis qu'au contraire, le roulement 50b se déplace vers le bas et dégage le cran 44b. Le déplacement de la plaquette 45 entraîne alors la rotation du secteur 43, qui peut alors tourner librement en solidarisant le bras 21a du système de garnitures, sans être gêné par le roulement 50b et sans pour cela entraîner le dispositif de commande dans la suite de sa rotation.

Le déplacement latéral de la plaquette 45 est commandé par deux câbles ou tringles 51a, 51b, eux-mêmes liés au déplacement latéral de la structure secondaire (ou d'une masselotte) et/ou à l'inclinaison du siège du conducteur.

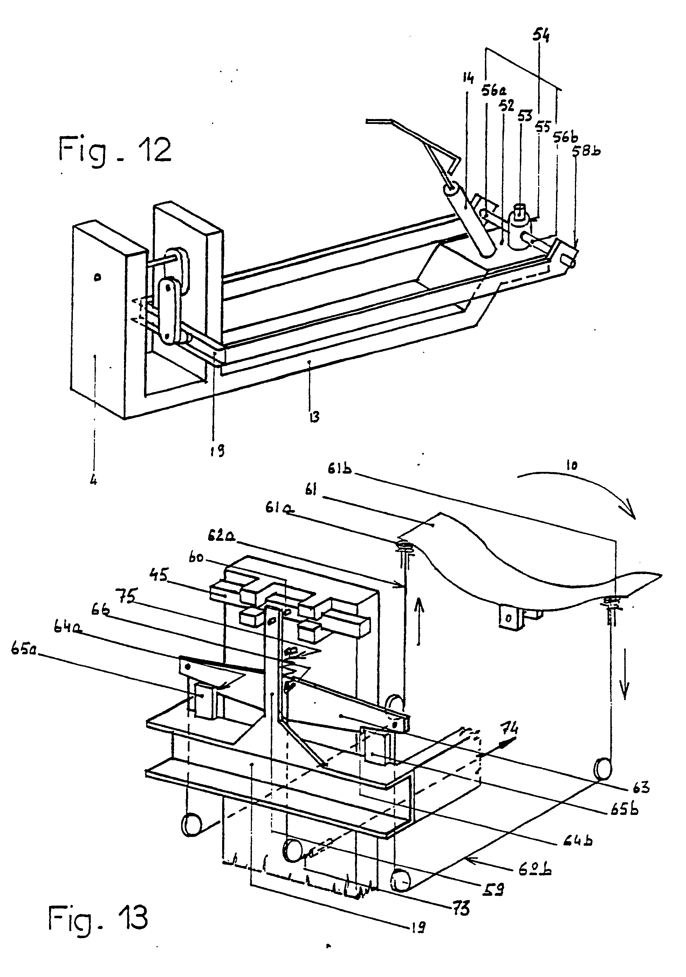

La figure 12 représente le montage de la structure secondaire sur la structure primaire pour permettre à ladite structure secondaire de se déplacer selon deux degrés de liberté. A cet effet, la structure primaire porte au droit de la colonne de direction 14 un appendice 52 auquel est fixé un axe 53 parallèle à l'élément de structure porteur 4. Sur cet axe 53 est monté pivotant un chevêtre 54 constitué par un collier 55 auquel sont fixés deux axes 56a, 56b parallèles à la traverse 19. Les longerons 57a, 57b de la structure secondaire sont articulés en 58a, 58b sur les axes 56a, 56b. On voit que la traverse 19 peut ainsi se déplacer autour de deux axes de rotation, l'un parallèle à l'élément 4, l'autre perpendiculaire au plan moyen du véhicule.

La figure 13 montre comment l'embrayage peut être commandé par la pesanteur mais contrôlé par le conducteur.

La traverse 19 est solidaire d'un taquet 59, qui, par un téton 60, entraîne le mouvement de la plaquette 45 qui elle-même comme on l'a vu ci-dessus, peut provoquer l'embrayage quand elle se déplace dans le sens de rotation de la poulie 9.

Le mouvement de la traverse 19 est contrôlé par le siège du conducteur 61 monté sur des ressorts 61a, 61b et dont l'inclinaison éventuelle est transmise avec inversion de sens à un balancier 63 par des câbles 62a, 62b. Ce balancier porte des crans 64a, 64b, qui peuvent interférer avec des taquets 65a, 65b solidaires de la traverse 19. Ainsi, si le véhicule tend à s'incliner vers la droite (sens de la flèche 10), il peut se produire deux cas:

1) Le conducteur tourne vers la droite et s'incline de ce même côté ; dans ce cas le balancier 63 s'incline vers la gauche, le cran 64a bloque le taquet 65a, la traverse 19 ne peut se déplacer vers la droite sous l'influence de la pesanteur et le mouvement reste libre.

2) Le conducteur arrête son véhicule et, au moment où celui-ci commence à tomber vers la droite, s'incline vers la gauche pour rétablir l'équilibre ; le balancier 63 s'incline à droite et de même la traverse 19, commandant ainsi l'embrayage et le fonctionnement du dispositif stabilisateur.

Il va de soi que le dispositif de commande d'embrayage pourrait être commandé directement par le siège, la commande par la gravité présente l'avantage d'agir également en l'absence de conducteur, ou au cas de fausse manoeuvre de celui-ci.

Ce dispositif peut également être mis sous le contrôle de la vitesse du véhicule. Ainsi, un régulateur centrifuge d'un type bien connu peut, à partir d'une certaine vitesse, par action sur un câble 73, dans le sens de la flèche 74, abaisser l'axe d'articulation 66 du balancier 63 rappelé par un ressort 75, ce qui a pour effet de bloquer tout mouvement de la traverse 19 et de maintenir entièrement libre l'inclinaison du véhicule en cours de route.

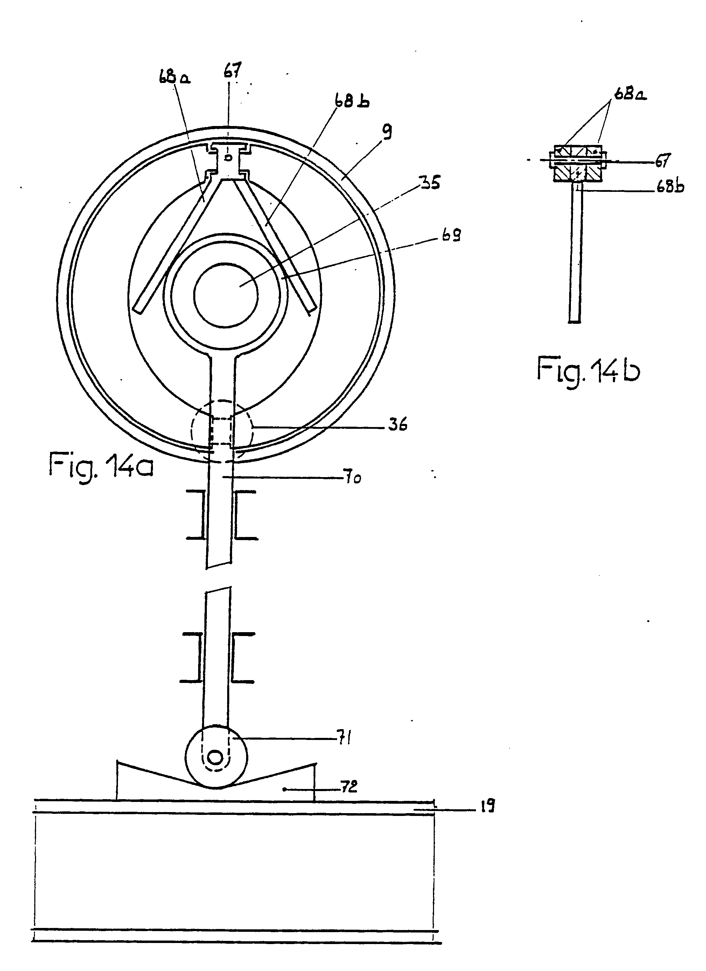

Enfin, l'amorçage de l'embrayage peut également se faire directement en agissant sur l'articulation 37 des garnitures 38a, 38b, comme indiqué sur les figures 14a, et 14b. Sur ces figures, l'articulation habituelle du couple de garnitures sur l'axe 37 est remplacée par un ciseau formé de 2 éléments 68a, 68b articulés sur un axe 67 dont les branches s'appuient sur un anneau 69 centré en position de repos sur l'axe d'articulation 35. Cet anneau est solidaire d'une tige 70 coulissant parallèlement à l'élément de structure 4 et portant à son extrémité un roulement 71 qui roule sur une came 72 de forme convenable solidaire de la traverse 19. Le mouvement de la came dont la position peut d'ailleurs être modifiée par l'action du conducteur ou du régulateur centrifuge provoque la levée de la tige 70 et de l'anneau 69, qui écarte les branches du ciseau et entraîne un premier serrage des garnitures. Ce premier serrage provoque la rotation de l'articulation 36 et l'embrayage du dispositif stabilisateur. Les branches du ciseau présentent une certaine souplesse pour ne pas gêner le soulèvement de la traverse 19.

L'action du régulateur centrifuge peut aussi être appliquée à la tige 70 pour maintenir la traverse 19 immobile, grâce au roulement 71 et à la came 72, lorsque le véhicule atteint une certaine vitesse.

Il va de soi que les systèmes de soulèvement et d'embrayage décrits dans le présent brevet ne le sont qu'à titre d'exemples non limitatifs. Ainsi, le soulèvement pourrait être réalisé par un treuil à rayon constant ou variable, la partie secondaire pourrait comporter un autre élément que la caisse, par exemple une masselotte ou un ressort, l'embrayage pourrait être réalisé par des dispositifs pneumatiques, hydrauliques ou électriques ou une combinaison de tels dispositifs, ou enfin remplacé par un crabotage, tous ces systèmes étant bien connus en l'état actuel de la technique.

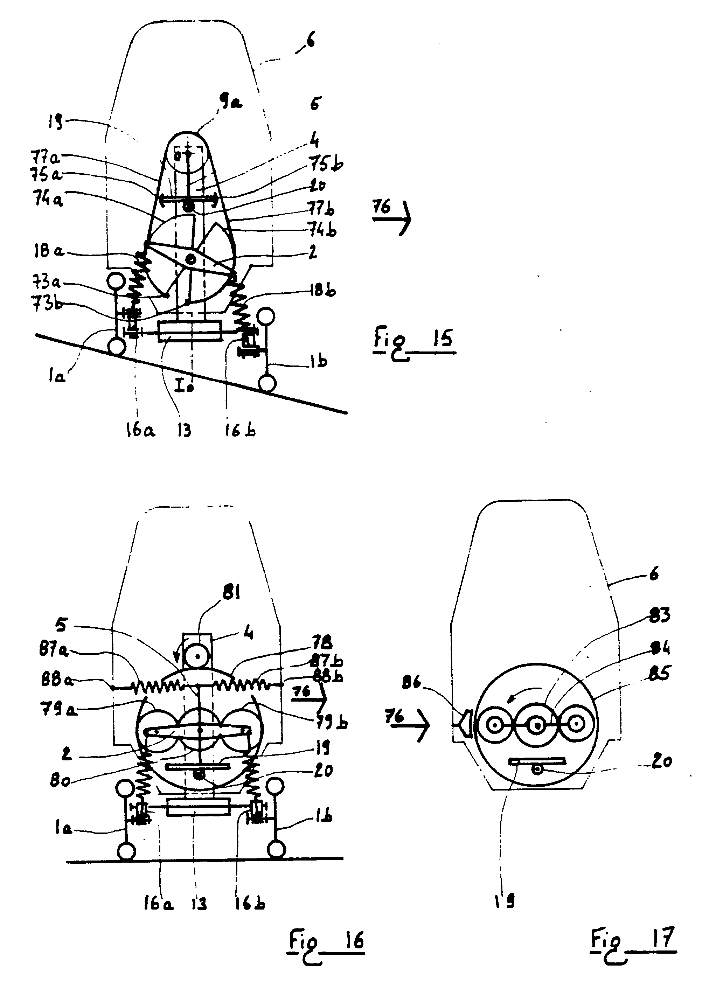

Par exemple, sur la figure 15, la liaison entre le balancier 2 et l'organe rotatif solidaire du bras 5 est assurée par un câble. Cet organe rotatif est constitué par un treuil 9a sur lequel le câble effectue un nombre de tours suffisant, de 3 à 5 par exemple, pour que l'on puisse utiliser l'effet de cabestan. Les extrémités du câble 73a, 73b sont fixées à des secteurs 74a, 74b solidaires du balancier 2 et au repos le câble est peu tendu de façon à glisser sur le treuil 9a sans le faire tourner.

La caisse 6 est portée par la traverse 19 qui repose sur le galet 20 placé à l'extrémité du bras 5 solidaire du treuil 9a. Cette traverse comporte deux butées 75a, 75b qui, en cas de déplacement latéral de la traverse, viennent appuyer sur l'un ou l'autre des deux brins de câble.

Si par exemple le caisse se déplace dans le sens de la flèche 76 la butée 75b vient tendre légèrement le câble 77b et cette tension grâce à l'effet de cabestan bien connu, est suffisante pour permettre la mise en tension du brin 77a et le rendre solidaire du treuil 9a, ce qui entraîne la rotation du bras 5 et le soulèvement de la traverse 19.

Enfin, il peut être intéressant, pour un véhicule destiné à utiliser des terrains variés, ou pour décharger le conducteur des soucis de l'équilibrage permanent du véhicule, de réaliser un dispositif tel que la référence du système stabilisateur, à savoir la droite lo, origine de l'angle $\alpha$, suive la verticale, si le terrain n'est pas horizontal, ou mieux d'une façon plus générale la verticale apparente, c'est-à-dire la résultante de la pesanteur et de la force centrifuge. Dans ce but, l'un au moins des éléments rotatifs de liaison entre le primaire et le secondaire peut être placé sous le contrôle d'un élément rotatif indépendant, actionné par un servo-mécanisme commandé par un pendule, une masselotte, voire la caisse elle-même, comme il est indiqué dans le brevet européen PATIN N° 4230. Ainsi, dans la figure 16, le système multiplicateur de rotation est constitué par un train épicycloïdal comportant une couronne 78 liée au châssis primaire, deux satellites 79a, 79b portés par le balancier 2, et un planétaire 80 solidaire du bras 5 qui par le galet 20 porte la traverse 19 solidaire de la caisse 6. La couronne 78 est positionnée en rotation par rapport au châssis 4 par un pignon 81 susceptible d'être entraîné par un servo-mécanisme représenté schématiquement sur la figure 17.

Ce servo-mécanisme est constitué par deux trains épicycloïdaux formant inverseur et dont l'un seulement est représenté par mesure de simplification. Le planétaire 83 de ce train est entraîné par le moteur du véhicule ou par un moteur indépendant. Le porte-satellites 84 entraîne le pignon 81, s'il y a lieu par l'intermédiaire d'un réducteur non représenté, et la couronne 85 tourne librement, sous le contrôle d'un frein 86 solidaire de la caisse 6. Normalement le porte-satellites 84 est immobile et la couronne 85 tourne folle. Si la caisse 6 est poussée ou s'incline dans le sens de la flèche 76, la couronne est freinée et le porte-satellites se met à tourner dans le sens de rotation du planétaire, entraînant le pignon 81 qui provoque donc une rotation de la couronne par rapport au châssis 4, ce qui revient à modifier la référence liée au châssis dans le sens qui provoquera le redressement de l'ensemble. Dans un tel cas, l'inertie de la caisse au moment du redressement aura tendance à augmenter l'effet de l'inclinaison de la caisse sur le frein 86. Cet effet pourra être annulé par un dispositif de feed-back constitué par deux ressorts 87a, 87b reliant le bras 5 à deux points 88a, 88b de la caisse, la rotation du bras 5 allégeant l'action de la caisse sur le frein 86 en allongeant le ressort 87b.

On pourra éviter tout risque de pompage en plaçant entre le porte-satellites 84 et le pignon 81 un réducteur irréversible, dispositif connu en soi et qu'il n'apparait pas nécessaire de représenter, complété éventuellement par un dispositif d'embrayage comme indiqué précédemment.

**Revendications**

1. Dispositif stabilisateur pour véhicule inclinable, ledit véhicule comportant une partie primaire (2, 4) déformable et une partie secondaire indéformable portée par ladite partie primaire, les deux parties précitées étant liées de telle façon que lors d'une rotation relative de deux éléments de la partie primaire (2, 4) lorsqu'elle s'incline, un système (7-9) agit sur un élément (5) dont la rotation provoque un déplacement de la partie secondaire par rapport à la partie primaire (2, 4), dispositif stabilisateur caractérisé en ce que la partie primaire (2, 4) se déforme sous l'effet de l'inclinaison, le système (7-9) est un système multiplicateur de la rotation qui agit sur l'élément (5) de telle manière que le centre de gravité (G) de l'ensemble tende à s'éloigner du sol selon la direction de la verticale apparente, la liaison entre la partie primaire (4) et le bras (5) de soulèvement de la partie secondaire comporte un élément d'accouplement et de désaccouplement constitué par un embrayage (9-38-39-40) permettant d'interrompre ladite liaison lorsque le véhicule roule et de la rétablir lorsqu'elle est nécessaire, c'est-à-dire au moment de l'arrêt ou juste avant l'arrêt, ou en cas de fausse manoeuvre, et par le fait qu'entre ladite partie primaire constituée par les roues (1a, 1b), la suspension (2a, 2b ; 3a, 3b) et un châssis (13) porteur d'un élément de structure (4) et la partie secondaire supportée par un bras rotatif (5), il existe une liaison rotative (7-8-9) telle que la rotation du bras (5) est multiple de celle de l'élément (4) par rapport au sol, le rapport de multiplication étant choisi pour qu'au cours d'un mouvement qui tendrait à faire tomber l'ensemble du véhicule, la rotation du bras (5) provoque le soulèvement de la partie secondaire et la montée du centre de gravité (G) de l'ensemble du véhicule.

2. Dispositif selon la revendication 1, caractérisé par le fait que la partie secondaire (6) est solidaire du bras (5) et est entraînée dans la rotation par le système multiplicateur de rotation (7-9).

3. Dispositif selon la revendication 1, caractérisé par le fait que la partie secondaire coulisse sur l'élément de structure (4) de la partie primaire lors de son déplacement par rapport à la partie primaire.

4. Dispositif selon l'une quelconque des revendications 1 à 3, caractérisé par le fait que la liaison entre la partie primaire et le bras rotatif (5) comporte un embrayage sur lequel agit le poids de la partie secondaire (6) qui est montée rotative sur des axes (53, 56) et qui agit par l'intermédiaire d'un ensemble de commandes (43-45, 48, 50) lorsque le véhicule s'incline grâce à un taquet (59) solidaire d'une traverse (19) liée à la partie secondaire.

5. Dispositif selon l'une quelconque des revendications 1 à 3, caractérisé par le fait que la liaison entre la partie primaire et le bras rotatif (5) est réalisée par un câble dont la friction sur un élément rotatif (9) est obtenue par un effet de cabestan, grâce à la poussée de la caisse sur l'un des bras du câble.

6. Dispositif selon l'une quelconque des revendications 4 ou 5, caractérisé par le fait que le déplacement de la traverse (19) qui provoque le fonctionnement du dispositif de soulèvement de la caisse est contrôlé par l'inclinaison du siège (60) du conducteur, agissant par des câbles (62a, 62b) sur un balancier (63) qui bloque ou libère le déplacement latéral de la traverse (19) solidaire de la partie secondaire (6).

7. Dispositif selon la revendication 6, caractérisé par le fait que le balancier de blocage (63) est maintenu en position de blocage du mouvement de la traverse (19), c'est-à-dire en position de liberté d'inclinaison du véhicule en cours de route, par l'action d'un dispositif centrifuge sur un câble (73) agissant sur la position de l'axe (66) dudit balancier de blocage.

8. Dispositif selon l'une quelconque des revendications 1 à 3, caractérisé par le fait que la liaison entre l'élément de structure (4) allié à la partie primaire et le bras rotatif (5) provoquant le déplacement de la partie secondaire est réalisée par un système multiplicateur de rotation dont le facteur de multiplication varie en fonction de la rotation de la partie primaire par rapport au sol.

9. Dispositif selon l'une quelconque des revendications 1 à 8, caractérisé en ce que la liaison entre la partie primaire (4) et le bras rotatif (5) peut être modifiée par l'action d'un servomécanisme qui agit sur l'un des éléments de la liaison pour tenir compte des variations de la verticale apparente.

## Claims

1. A stabiliser device for an inclinable vehicle, the said vehicle comprising a deformable primary part (2, 4) and a non-deformable secondary part carried by the said primary part, the two aforesaid parts being connected together in such a way that when the two members of the primary part (2, 4) rotate relative to each other as it is inclined a system (7-9) acts on a member (5) whose rotation causes displacement of the secondary part with respect to the primary part (2, 4), a stabiliser device characterised in that the primary part (2, 4) deforms as a result of the inclination, the system (7-9) is a rotation multiplier system which acts on the member (5) in such a way that the centre of gravity (G) of the whole tends to move away from the ground in the direction of the apparent vertical, the connection between the primary part (4) and the lifting arm (5) of the secondary part includes a coupling and uncoupling member consisting of a clutch (9-38-39-40) whereby the said connection can be broken when the vehicle is travelling and re-established when necessary, i.e. when stopping or just before stopping, or in the event of an incorrect manoeuvre, as a result of the fact that there is between the said primary part consisting of the wheels (1a, 1b), the suspension (2a, 2b; 3a, 3b) and a frame (13) bearing a structural member (4) and the secondary part supported by a rotating arm (5) a rotating connection (7-8-9) such that the rotation of the arm (5) is a multiple of the rotation of the member (4) with respect to the ground, the multiplication ratio being selected so that in the course of a movement which would cause the vehicle as a whole to fall, rotation of the arm (5) causes the secondary part to be raised and the centre of gravity (G) of the vehicle as a whole to rise.

2. A device according to claim 1, characterised in that the secondary part (6) is integral with the arm (5) and is caused to rotate by the rotation multiplier system (7-9).

3. A device according to claim 1, characterised in that the secondary part slides on the structural member (4) of the primary part as it is displaced with respect to the primary part.

4. A device according to any one of claims 1 to 3, characterised in that the connection between the primary part and the rotating arm (5) includes a clutch upon which acts the weight of the secondary part (6) which is mounted to rotate on axes (53, 56) and which acts through a set of controls (43-45, 48, 50) when the vehicle becomes inclined, through the action of a stop (59) which is integral with a cross-member (19) attached to the secondary part.

5. A device according to any one of claims 1 to 3, characterised in that the connection between the primary part and the rotating arm (5) is by means of a cable whose friction on a rotating member (9) is produced by a capstan effect as a result of the thrust of the body on one of the arms of the cable.

6. A device according to either of claims 4 or 5, characterised in that the displacement of the cross-member (19) which causes the device raising the body to operate is controlled by the inclination of the driver's seat (60), acting through cables (62a, 62b) on a rocker (63) which immobilises or releases lateral displacement of the cross-member (19) integral with the secondary part (6).

7. A device according to claim 6, characterised in that the locking rocker (63) is maintained in a position locking movement of the cross-member (19), i.e. in a position which allows the vehicle to incline freely when travelling, through the action of a centrifugal device on a cable (73) which acts on the position of the axis (66) of the said rocking locker.

8. A device according to any one of claims 1 to 3, characterised in that the connection between the structural member (4) connected to the primary part and the rotating arm (5) causing displacement of the secondary part is achieved through a rotation multiplier system whose multiplication factor varies in relation to the rotation of the primary part with respect to the ground.

9. A device according to any one of claims 1 to 8, characterised in that the connection between the primary part (4) and the rotating arm (5) can be modified through the action of a servomechanism which acts on one of the members of the connection in order to take changes in the apparent vertical into account.

**Ansprüche**

1. Vorrichtung zur Stabilisierung eines schrägstellbaren Fahrzeugs, wobei das Fahrzeug einen ersten nachgiebigen Teil (2, 4) und einen zweiten nicht-nachgiebigen Teil enthält, der durch den ersten Teil getragen wird, und die zwei vorgenannten Teile so miteinander verbunden sind, daß dann, wenn sich der erste Teil (2, 4) während einer Drehbewegung relativ zu zwei Elementen des ersten Teils, schrägstellt, eine Einrichtung (7-9) auf ein Element (5) wirkt, durch das die Drehbewegung eine Verschiebung des zweiten Teils in Bezug auf den ersten Teil (2, 4) hervorruft, **dadurch gekennzeichnet**, daß sich der erste Teil (2, 4) unter der Einwirkung der Schrägstellung verformt, daß die Einrichtung (7-9) eine Übersetzungseinrichtung ist, die auf das Element (5) in der Weise einwirkt, daß der Schwerpunkt (G) der Konstruktion dazu tendiert, sich in der Richtung der scheinbaren Vertikalen vom Boden zu entfernen, daß die Verbindung zwischen dem ersten Teil (4) und dem Arm (5) zum Anheben des zweiten Teils ein An- und Abkoppelelement enthält, das durch eine Kupplung (9-38-39-40) gebildet ist, die es erlaubt, die genannte Verbindung zu unterbrechen, wenn das Fahrzeug fährt, und diese wiederherzustellen, wenn es nötig ist, d. h. im Moment des Anhaltens oder kurz vor dem Anhalten oder im Falle einer Fehlbedienung, daß aufgrund der Tatsache, daß zwischen dem ersten Teil, der durch Räder (1a, 1b), eine Aufhängung (2a, 2b; 3a, 3b) und ein Chassis (13) aus einem Strukturelement (4) gebildet ist, und dem zweiten Teil, der durch einen Dreharm (5) getragen ist, eine Drehverbindung (7-8-9) vorhanden ist, dergestalt, daß die Drehung des Armes (5) in Bezug auf den Boden ein Vielfaches der des Elementes (4) ist, wobei der Übersetzungsfaktor so gewählt ist, daß im Verlauf einer Bewegung, die die Tendenz hat das gesamte Fahrzeug umstürzen zu lassen, die Drehbewegung des Armes (5) ein Anheben des zweiten Teils und ein Verlagern des Schwerpunktes (G) des gesamten Fahrzeuges nach oben hervorruft.

2. Vorrichtung nach Anspruch 1, **dadurch gekennzeichnet**, daß der zweite Teil (6) mit dem Arm (5) verbunden ist und durch die Übersetzungseinrichtung (7-9) in eine Drehbewegung versetzt wird.

3. Vorrichtung nach Anspruch 1, **dadurch gekennzeichnet**, daß der zweite Teil auf dem Strukturelement (4) des ersten Teils während seiner Verschiebung in Bezug auf das erste Teil gleitet.

4. Vorrichtung nach einem der Ansprüche 1 bis 3, **dadurch gekennzeichnet**, daß die Verbindung zwischen dem ersten Teil und dem Dreharm (5) eine Kupplung enthält, auf die das Gewicht des zweiten Teils (6) wirkt, der auf den Wellen (53, 56) drehbar gelagert ist, und der mittels eines Komplexes von Antrieben (43-45, 48, 50) wirkt, wenn das Fahrzeug sich dank eines Mitnehmers (59) neigt, der an einer Traverse (19) befestigt ist, die mit dem zweiten Teil verbunden ist.

5. Vorrichtung nach einem der Ansprüche 1 bis 3,
**dadurch gekennzeichnet,** daß die Verbindung zwischen dem ersten Teil und dem Dreharm (5) durch ein Seil realisiert ist, dessen Reibung auf einem Drehelement (9) durch einen Windeneffekt dank des Drucks des Gehäuses auf einen der Stränge des Seils erzielt wird.

6. Vorrichtung nach einem der Ansprüche 4 oder 5,
**dadurch gekennzeichnet,** daß die Verschiebung der Traverse (19), die das Wirken der Einrichtung zum Anheben des Gehäuses hervorruft, von der Neigung des Sitzes (60) des Fahrers abhängig ist, der durch die Seile (62a, 62b) auf eine Schwinge (63) wirkt, die die seitliche Verschiebung der Traverse (19), die an dem zweiten Teil (6) befestigt ist, blockiert oder freigibt.

7. Vorrichtung gemäß Anspruch 6,
**dadurch gekennzeichnet,** daß die Blockierschwinge (63) durch die Wirkung einer Fliehkrafteinrichtung auf ein Seil (73), das auf die Lage der Achse (66) der Blockierschwinge einwirkt, in Blockierstellung für die Bewegung der Traverse (19) gehalten wird, d. h. in einer Stellung, in der sich das Fahrzeug unterwegs frei neigen kann.

8. Vorrichtung nach irgendeinem der Ansprüche 1 bis 3,
**dadurch gekennzeichnet,** daß die Verbindung zwischen dem Strukturelement (4), das mit dem ersten Teil verbunden ist, und dem Dreharm (5), der die Verschiebung des zweiten Teils hervorruft, durch eine Übersetzungseinrichtung realisiert ist, wobei der Übersetzungsfaktor in Abhängigkeit von der Drehbewegung des ersten Teil in Bezug auf den Boden variiert.

9. Vorrichtung nach irgendeinem der Ansprüche 1 bis 8,
**dadurch gekennzeichnet,** daß die Verbindung zwischen dem ersten Teil (4) und dem Dreharm (5) durch die Wirkung eines Servomechanismus modifiziert sein kann, der auf eines der Verbindungselemente wirkt um die Änderungen der scheinbaren Vertikalen zu berücksichtigen.

Fig. 1

Fig. 2

Fig. 3

Fig. 4

Fig 5 a

Fig. 6a

14

Fig. 5b

Fig. 6b

Fig. 5c

Fig. 6c

Fig. 7a

Fig. 7b

Fig. 8

Fig. 9

Fig. 10a

Fig. 10 b

Fig. 11

Fig. 12

Fig. 13

Fig. 14a

Fig. 14b

Fig 15

Fig 16

Fig 17

20